# EUROPEAN PATENT APPLICATION

(11) **EP 4 470 972 A1**
(43) Date of publication of application: **04.12.2024**
(21) Application number: 23305877.5
(22) Date of filing: 02.06.2023
(51) Int. Cl.: C01B 21/086, C01B 21/093, C07C 303/34, H01M 10/0568

(54) **PROCESS FOR PRODUCING ONIUM SALTS OF BIS(FLUOROSULFONYL)IMIDE**

(71) Applicant: SPECIALTY OPERATIONS FRANCE, 69003 Lyon (FR)
(72) Inventor: PLISSONNEAU, Marie, 69190 Saint-Fons (FR); SCHMITT, Etienne, 69190 Saint-Fons (FR)
(74) Representative: Benvenuti, Federica

(57) **Abstract**

The invention relates to a process for manufacturing bis(fluorosulfonyl)imide onium salt(s) comprising at least a step of reacting an onium chloride with molten bis(fluorosulfonyl)imide, and to a process for producing an alkali metal salt of bis(fluoro sulfonyl)imide from the said bis(fluorosulfonyl)imide onium salt(s).

## Description

### Technical Field

The invention relates to a process for manufacturing bis(fluorosulfonyl)imide onium salt(s) comprising at least a step of reacting an onium chloride with molten Bis(fluorosulfonyl)imide. The invention also relates to a process for producing an alkali metal salt of bis(fluoro sulfonyl)imide from the said bis(fluorosulfonyl)imide onium salt(s).

### Background Art

Bis(fluorosulfonyl)imide and salts thereof, in particular the lithium salt of bis(fluorosulfonyl)imide (LiFSI), are useful compounds in a variety of technical fields. Bis(fluorosulfonyl)imide and their salts are especially useful in battery electrolytes. For the use in batteries, it is very important to limit the presence of impurities.

The production of bis(fluorosulfonyl)imide and salts thereof is described in the literature. Among the various technologies described, an onium salt, generally an ammonium salt, of bis(fluorosulfonyl)imide is first prepared, and in a subsequent step, via a cation exchange reaction, the target metal salt of of bis(fluorosulfonyl)imide is obtained. Indeed, onium salt of bis(fluorosulfonyl)imide are advantageous intermediates as they are low melting and relatively stable, so as to be possibly submitted to appropriate purification steps, for achieving, in the final LiFSI the target purity sought for use in battery applications.

For instance, US 2013/0331609 discloses a process for producing NH₄FSI including reacting a chlorosulfonlyimide compound with a fluorinating agent of formula NH₄F(HF)ₚ, wherein p is 0 to 10. The NH4FSI obtained is then subjected to a cation exchange reaction to produce another fluorosulfonylimide salt.

Notably, WO 2017/090877 (CLS) describes a method for producing lithium bis(fluorosulfonyl)imide comprising the steps of: (1) reacting bis(chlorosulfonyl)imide with a fluorinating reagent in a solvent, followed by treatment with an alkaline reagent, thereby producing ammonium bis(fluorosulfonyl)imide; and (2) reacting the ammonium bis(fluorosulfonyl)imide with a lithium base.

Still, WO 2020/099527 (Solvay SA) discloses a method for producing an alkali salt of bis(fluoro sulfonyl)imide, comprising the steps of: a) reacting bis(chloro sulfonyl)imide or salts thereof with ammonium fluoride to produce ammonium salt of bis(fluoro sulfonyl)imide; b) crystallizing by adding at least one precipitation solvent and separating the ammonium salt of bis(fluoro sulfonyl)imide; and c) reacting the crystallized ammonium salt of bis(fluoro sulfonyl)imide with an alkali salt to obtain alkali salt of bis(fluorosulfonyl)imide.

### Summary of invention

One object of the present invention is a method for producing an onium salt of bis(fluorosulfonyl)imide (onium salt of FSI), comprising the steps of:
a) melting bis(fluorosulfonyl)imide (HFSI); and
b) contacting molten HFSI with an onium chloride, so as to produce a molten mixture [mixture (M)] comprising an onium salt of bis(fluorosulfonyl)imide (onium salt of FSI) and dissolved HCl gas;
c) removing dissolved HCl gas from the said molten mixture (M); and
d) recovering the said onium salt of FSI from said mixture (M).

Another object of the present invention is a method for producing an alkali metal salt of bis(fluoro sulfonyl)imide, such method comprising:
a) melting bis(fluorosulfonyl)imide (HFSI); and
b) contacting molten HFSI with an onium chloride, so as to produce a molten mass comprising an onium salt of bis(fluorosulfonyl)imide (onium salt of FSI) and dissolved HCl gas;
c) removing dissolved HCl gas from the said molten mass; and
d) recovering the said onium salt of FSI from said molten mass; and
e) reacting the onium salt of FSI with an alkali metal salt to obtain an alkali metal salt of bis(fluorosulfonyl)imide (FSI); and
f) recovering said alkali metal salt of bis(fluoro sulfonyl)imide.

The Applicant has surprisingly found that the reaction between the onium chloride, in particular ammonium chloride, and molten HFSI proceeds in a selective manner, without significant formation of side-products; in particular, thanks to the higher acidity of HFSI over HCl, the onium chloride has been found to effectively displace the acidic hydrogen of FSI, so as to lead to the onium salt while releasing HCl gas. Further, the Applicant has surprisingly found that, contrary to onium salts other than chlorides, neutralization with onium chlorides occurs with no significant exothermal effect, which may jeopardize stability of HFSI or its onium salt. For instance, reaction HFSI + NH₄Cl has been found to be endothermic, due to the concomitant release of HCl gas from the reaction mixture while, for instance, reaction HFSI+ (NH₄)₂SO₄ is significantly exothermal, so that temperature control in the reaction is more difficult and thermal decomposition phenomena are more difficult to be avoided and minimized. The manufacturing methods according to the present invention are hence suitable for being implemented at industrial scale, with a reasonable cost when compared to the other available methods. Especially, the onium salt manufacturing method produces as side product gaseous HCl, which can be recovered and valorized under dry or aqueous solution form depending on needs, instead of representing an additional burden to deal therewith. Indeed, differently as per other known processes, the main by-product of the process of the invention is a valuable bulk chemical which finds utility in different industries.

### Disclosure of the invention

In the present disclosure:
- the expressions "comprised between ... and ..." as well as "ranging from... to... " or the like should be understood as including the limits;
- any description, even though described in relation to a specific embodiment, is applicable to and interchangeable with other embodiments of the present invention;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list; and - any recitation herein of numerical ranges by endpoints includes all numbers subsumed within the recited ranges as well as the endpoints of the range and equivalents.

The Step (a) of the method according to the invention consists in melting bis(fluorosulfonyl)imide; bis(fluorosulfonyl)imide, also known as hydrogen bis(fluorosulfonyl)imide or referred to as HFSI is used as raw material, and can be represented by the formula: F-SO₂-NH-SO₂-F.

According to the present invention, in Step (a), HFSI is molten, by raising the temperature beyond its melting point, that is to say at a temperature exceeding about 17°C.

The choice of the HFSI melting temperature is not particularly critical, provided that the appropriate molten viscosity is achieved, for delivering the molten HFSI to Step (b). A temperature ranging between 17 and 100°C, preferably between 18 to 80°C, more preferably between 20 to 60°C is adequate in Step (a).

Generally, HFSI is molten under a protective atmosphere, notably under an atmosphere which is substantially exempt from moisture. The amount of moisture in Step (a) is generally kept below 5,000 ppm, more preferably below 1,000 ppm, more preferably below 500 ppm, more preferably below 100 ppm even more preferably below 50 ppm, with respect to the HFSI.

Step (b) does not comprises the use of significant amount of diluents, that is to say, Step (b) is generally carried out either in the absence of diluent or in the presence of an amount of diluent of less than 5 wt.% based on the total weight of the mixture (M). Importantly, Step (b) of the method of the present invention is a solvent-free step. In other words, no solvent/diluent, alternatively a very low amount of solvent/diluent, is added to the mixture (M) during the reaction of Step (b). Carrying out Step (b) without adding any further diluent is especially advantageous. Indeed, the use of diluent during such Step (b) implies that the solvent(s) will have to be chemically stable in presence of HFSI and to be completely removed after reaction in order to obtain an as pure as possible intermediate, leading to a ultra high-purity product which can be used for battery applications. The steps required for removing the diluent(s) or its unwanted side-products adds to the complexity of the industrial process, as well as its overall cost. In addition, before being used, the diluents typically have to be treated to remove the residual amount water, as only anhydrous diluents, where the residual amount of water is in the ppm amount, may be tolerated (moisture causing otherwise unwanted hydrolysis reactions of HFSI or its salts). It is therefore a main advantage that Step (b) of the present process may be carried out essentially diluent-free. Deleterious reactions, which could occur between hydrogen chloride (main by-product formed in Step (b)) and the diluent possibly used, can thus be avoided. Additionally, because the step for removing the diluent is not needed for Step (b), the present invention overall provides a simpler production process of onium salt of bis(fluorosulfonyl)imide, significantly decreasing the complexity of the industrial process, as well as its overall cost.

According to an alternative but less preferred embodiment, Step (b) may be carried out in the presence of a very low amount of diluent, that-is-to-say an amount of solvent less than 5 wt.%, based on the total weight of the mixture (M). The use of a low amount of diluent may be beneficial for adjusting the viscosity of the mixture (M) if chosen according to previously listed requirements, including chemical stability in presence of HFSI. Preferably, according to this embodiment, the amount of solvent is less than 4 wt.%, less than 3 wt.%, less than 2 wt.%, less than 1 wt.%, less than 0.5 wt.%, less than 0.1 wt.%, less than 0.01 wt.%, or less than 0.001 wt.% of solvent, based on the total weight of the mixture (M).

Diluents which are typically used in such less preferred embodiments are well-known and extensively described in the literature. Such diluents may be aprotic, for example polar aprotic solvents, and may selected from the group consisting of:
- cyclic and acyclic carbonates, for instance ethylene carbonate, propylene carbonate, butylene carbonate, dimethyl carbonate, ethyl methyl carbonate, diethyl carbonate,
- cyclic and acyclic esters, for instance gamma-butyrolactone, gamma-valerolactone, methyl formate, methyl acetate, methyl propionate, ethyl acetate, ethyl propionate, isopropyl acetate, propyl propionate, butyl acetate,
- cyclic and acyclic ethers, for instance diethylether, diisopropylether, methyl-t-butylether, dimethoxymethane, 1,2-dimethoxyethane, tetrahydrofuran, 2-methyltetrahydrofuran, 1,3-dioxane, 4-methyl-1,3-dioxane, 1,4-dioxane,
- amide compounds, for instance N,N-dimethylformamide, N-methyl oxazolidinone,
- sulfoxide and sulfone compounds, for instance sulfolane, 3-methylsulfolane, dimethylsulfoxide,
- cyano-, nitro-, chloro- or alkyl- substituted alkane or aromatic hydrocarbon, for instance acetonitrile, valeronitrile, adiponitrile, benzonitrile, nitromethane, nitrobenzene;
- haloalkanes, such as notably dichloromethane and derivatives thereof.

More preferably, if a diluent is used in Step (b), the said diluent may be selected from the group consisting of ethyl acetate, isopropyl acetate, butyl acetate, ethylene carbonate, dimethyl carbonate, ethyl methyl carbonate, propylene carbonate, valeronitrile, acetonitrile and dichloromethane and derivatives.

If a diluent is used to conduct Step (b), according to a preferred embodiment, the said diluent is anhydrous. Moisture content may be preferably below 5,000 ppm, more preferably below 1,000 ppm, more preferably below 500 ppm, more preferably below 100 ppm even more preferably below 50 ppm.

Yet, as said, Step (b) is advantageously carried out in the absence of any diluent, as described above.

In the framework of the invention, the expression "onium" is used within the usual meaning for the skilled person.

Examples of onium cations include phosphonium cation, oxonium cation, sulfonium cation, fluoronium cation, chloronium cation, bromonium cation, iodonium cation, selenonium cation, telluronium cation, arsonium cation, stibonium cation, bismutonium cation; iminium cation, diazenium cation, nitronium cation, diazonium cation, nitrosonium cation, hydrazonium cation, diazenium dication, diazonium dication, imidazolium cation, pyridinium cation, quaternary ammonium cation, tertiary ammonium cation, secondary ammonium cation, primary ammonium cation, ammonium NH4+ cation, piperidinium cation, pyrrolidinium cation, morpholinium cation, pyrazolium cation, guanidinium cation, isouronium cation and isothiouronium cation.

Among these, imidazolium cation, pyridinium cation, quaternary ammonium cation, tertiary ammonium cation, secondary ammonium cation, primary ammonium cation, ammonium NH₄⁺ cation, piperidinium cation, pyrrolidinium cation, morpholinium cation, pyrazolium cation, guanidinium cation, and isouronium cation are more preferred.

Examples of onium cations of these types include:
- imidazolium cations such as a 1,3-dimethylimidazolium cation, 1-ethyl-3-methylimidazolium cation, 1-propyl-3-methylimidazolium cation, 1-butyl-3-methylimidazolium cation, 1-pentyl-3-methylimidazolium cation, 1-hexyl-3-methylimidazolium cation, 1-heptyl-3-methylimidazolium cation, 1-octyl-3-methylimidazolium cation, 1-decyl-3-methylimidazolium cation, 1-tetradecyl-3-methylimidazolium cation, 1-hexadecyl-3-methylimidazolium cation, 1-octadecyl-3-methylimidazolium cation, 1-allyl-3-ethylimidazolium cation, 1-allyl-3-butylimidazolium cation, 1,3-diallylimidazolium cation, 1-ethyl-2,3-dimethylimidazolium cation, 1-butyl-2,3-dimethylimidazolium cation, 1-hexyl-2,3-methylimidazolium cation, and 1-hexadecyl-2,3-methylimidazolium cation;
- pyridinium cations such as a 1-ethylpyridinium cation, 1-butylpyridinium cation, 1-hexylpyridinium cation, 1-octylpyridinium cation, 1-ethyl-3-methylpyridinium cation, 1-ethyl-3-hydroxymethylpyridinium cation, 1-butyl-3-methylpyridinium cation, 1-butyl-4-methylpyridinium cation, 1-octyl-4-methylpyridinium cation, 1-butyl-3,4-dimethylpyridinium cation, and 1-butyl-3,5-dimethylpyridinium cation;
- quaternary ammonium cations such as a tetramethylammonium cation, tetraethylammonium cation, tetrapropylammonium cation, tetrabutylammonium cation, tetraheptylammonium cation, tetrahexylammonium cation, tetraoctylammonium cation, triethylmethylammonium cation, propyltrimethylammonium cation, diethyl-2-methoxyethylmethylammonium cation, methyltrioctylammonium cation, cyclohexyltrimethylammonium cation, 2-hydroxyethyltrimethylammonium cation, trimethylphenylammonium cation, benzyltrimethylammonium cation, benzyltributylammonium cation, benzyltriethylammonium cation, dimethyldistearylammonium cation, diallyldimethylammonium cation, 2-methoxyethoxymethyltrimethylammonium cation, N-methoxytrimethylammonium cation, N-ethoxytrimethylammonium cation, N-propoxytrimethylammonium cation and tetrakis(pentafluoroethyl)ammonium cation;
- tertiary ammonium cations such as a trimethylammonium cation, triethylammonium cation, tributylammonium cation, diethylmethylammonium cation, dimethylethylammonium cation, dibutylmethylammonium cation, and 4-aza-1-azoniabicyclo[2.2.2]octane cation;
- secondary ammonium cations such as a dimethylammonium cation, diethylammonium cation, and dibutylammonium cation;
- primary ammonium cations such as a methylammonium cation, ethylammonium cation, butylammonium cation, hexylammonium cation, and octylammonium cation;
- ammonium cation NH₄⁺;
- piperidinium cations such as a 1-propyl-1-methylpiperidinium cation and 1-(2-methoxyethyl)-1-methylpiperidinium cation;
- pyrrolidinium cations such as a 1-propyl-1-methylpyrrolidinium cation, 1-butyl-1-methylpyrrolidinium cation, 1-hexyl-1-methylpyrrolidinium cation, and 1-octyl-1-methylpyrrolidinium cation;
- morpholinium cations such as a 4-propyl-4-methylmorpholinium cation and 4-(2-methoxyethyl)-4-methylmorpholinium cation;
- pyrazolium cations such as a 2-ethyl-1,3,5-trimethylpyrazolium cation, 2-propyl-1,3,5-trimethylpyrazolium cation, 2-butyl-1,3,5-trimethylpyrazolium cation, and 2-hexyl-1,3,5-trimethylpyrazolium cation;
- guanidinium cations such as a guanidinium cation and a 2-ethyl-1,1,3,3-tetramethylguanidinium cation; and
- isouronium cations such as a 2-ethyl-1,1,3,3-tetramethylisouronium cation.

Quaternary ammonium chlorides, tertiary ammonium chlorides, secondary ammonium chlorides, primary ammonium chlorides, and ammonium chloride are more preferred, especially those specifically cited in the above list. Ammonium cation NH₄Cl is the most preferred onium chloride.

According to a preferred embodiment, the onium chloride used in Step (b) is anhydrous. Moisture content of the onium chloride may be preferably below 5,000 ppm, more preferably below 1,000 ppm, more preferably below 500 ppm, more preferably below 100 ppm even more preferably below 50 ppm.

Further, according to a preferred embodiment, the onium chloride used in Step (b) is essentially substantially free from metal impurities. Metal content of the onium chloride may be preferably below 500 ppm, more preferably below 100 ppm, more preferably below 50 ppm, more preferably below 10 ppm even more preferably below 5 ppm.

Step (b) can be performed in any type of reaction vessel which allows contacting the molten HFSI with the onium chloride. Typically, a stirred vessel may be used, which is particularly adapted for ensuring intimate contact between molten HFSI and the onium chloride. Yet, the vessel may be not equipped with stirring means, but may be equipped with other means for ensuring such intimate contact in the mixture (M) between HFSI and onium chloride, e.g. means for circulating the mixture (M), e.g. via a circulating pump forcing a flow of mixture (M) through the reaction vessel of Step (b). Still, an extruder may be used as a reaction vessel in Step (b); the use of an extruder may be preferred as it enables dealing with a high viscosity medium, such as mixture (M). Corrosion-resistant extruders are hence appropriate vessels for Step (b) of the present invention. The vessel may hence have any suitable three-dimensional shape, including a cylindrical shape or a tubular shape. The part of the vessel which are intended to come in contact with the mixture (M) may be realized in any corrosion-resistance material; such as the alloys based on molybdenum, chromium, cobalt, iron, copper, manganese, titanium, zirconium, aluminum, carbon and tungsten, sold under the Hastelloy^{®} brands or the alloys of nickel, chromium, iron and manganese to which copper and/or molybdenum are added, sold under the name Inconel^{®} or Monel^{™}, and more particularly the Hastelloy C276 or Inconel 600, 625 or 718 alloys. Stainless steels may also be selected, such as austenitic steels and more particularly the austenitic chromium-nickel stainless steel containing deliberate amount of molybdenum which increases general corrosion resistance and especially improves its pitting resistance to chloride ion solutions, being referred to as SS316, or its SS316L version, which is an extra-low carbon version of SS316 that minimizes harmful carbide precipitation during welding. A steel having a nickel content of at most 22% by weight, preferably of between 6% and 20% and more preferentially of between 8% and 14%, may be used. The 304 and 304L steels have a nickel content that varies between 8% and 12%, and the 316 and 316L steels have a nickel content that varies between 10% and 14%. Use may also be made of vessels consisting of or coated with a polymeric compound resistant to the corrosion of the mixture (M). Mention may in particular be made of materials such as PTFE (polytetrafluoroethylene) or PFA (perfluoroalkyl resins). Glass equipment may also be used. It will not be outside the scope of the invention to use an equivalent material. As other materials capable of being suitable for being in contact with the mixture (M), mention may also be made of graphite derivatives and ceramic materials.

The onium chloride may be contacted with the molten HFSI in Step (b) either in the molten state or in the solid state. Yet, especially in case of ammonium chloride, which is known to undergo dissociation to form ammonia and hydrogen chloride when heated, addition of onium chloride in solid state is preferred. Melting onium chloride or delivering molten/liquid onium chloride to Step (b) may be a suitable approach for low melting onium chlorides.

When the onium chloride is contacted with the molten HFSI in Step (b) in the solid state, the onium chloride is generally under the form of a powder. Hence, the onium chloride is generally delivered to the reaction vessel of Step (b) under the form of a powder. The expression "powder" is hereby used in its usual meaning, i.e. to designate an ensemble of particulate particles. The onium chloride powder may have an average particle size of at least 10 nm, preferably at least 100 nm, more preferably at least 250 nm; yet, it is advantageous for the onium chloride powder to have an average particle of at most 2500 µm, preferably at most 1500 µm, more preferably at most 1000 µm.

The powdery onium chloride may be delivered to the reaction vessel of Step (b) through a powder conveyor. Said powder conveyor may use pneumatic conveying means, including both pressure and vacuum pneumatic means; may use screw conveyor means, such as auger conveyors, helix conveyors, worm conveyors or flexible screw conveyors; may use belt conveying means; may use vibrating conveying means; or any other means adapted for dispensing powdery onium chloride into vessel of Step (b).

A thermal pre-treatment may be applied to the onium chloride so as to reduce its moisture content before delivering the same to the Step (b). Moisture content of onium chloride, when delivered to Step (b) may be preferably below 5,000 ppm, more preferably below 1,000 ppm, more preferably below 500 ppm, more preferably below 100 ppm even more preferably below 50 ppm.

Step (c) comprises removing HCl from the said mixture (M); according to preferred embodiments, Step (b) and at least partially Step (c) advantageously occur simultaneously. Yet, Step (c) may continue after completion of Step (b), for achieving a more exhaustive removal of HCl. In Step (c), HCl may be removed from the mixture (M) by venting the reaction vessel; a stream of inert gas, such as anhydrous nitrogen or anhydrous air, may be used for facilitating removal of HCl from the mixture (M). As an alternative, Step (c) may be facilitated by operating under reduced pressure, i.e. at a pressure which is inferior to ambient pressure (1 bar). This may be achieved by connecting the vessel comprising mixture (M) to suction means.

The HCl recovered from Step (c) is generally under the gaseous form; it may be absorbed in water, so as to generated a hydrochloric acid solution, or it may be further handled in the gas form, e.g. by distillation or other purification means, so as to obtain a purified HCl stream for further valorization.

The reaction in Step (b) may be carried out in a batch, semi-batch or continuous modes; in batch mode, the vessel may be loaded with HFSI, and once the same is molten, the onium salt may be added and the mixture (M) reacted until reaction is completed, and no longer evolution of HCl is detected. In a semi-batch arrangement, the vessel may be charged with HFSI, which, after being submitted to Step (a) of melting, is reacted progressively with the onium chloride which is added continuously, either step-wise or portion-wise, or by continuous conveying in Step (b), and the mixture (M) may be reacted until completing the addition of the onium salt, and the removal of HCl. As a further alternative, molten HFSI and the onium salt may be fed simultaneously in a continuous manner to the reaction vessel, so as to continuously produce a mixture (M), accompanied with a steady removal of HCl.

Step (b) is generally carried out at a temperature such that the mixture (M) remains in the molten state.

When the onium salts possess a melting temperature higher than the HFSI, the temperature of the mixture (M) will be generally higher than the melting point of HFSI, unless the HFSI and the onium salt of FSI are forming an eutectic mixture.

Further, depending on the target conversion in Step (b), the melting temperature at the end of Step (b) may approach or even exceed the melting temperature of the onium salt of FSI, so as to ensure that mixture (M) possesses significant molten viscosity for being handled in an effective manner.

For example, the target conversion of HFSI in Step (b) may be a complete conversion, in which case, the mixture (M) at the end of Step (b) and c) essentially consists of the onium salt of FSI. As an alternative, the target conversion may be a partial conversion, e.g. a conversion of less than 99%, less than 90%, less than 85%, less than 80%, and the like. A partial conversion can be achieved by usual means, e.g. by using a lower than stoichiometric amount of onium chloride with respect to the amount of HFSI used in Step (b) and so present in the mixture (M).

All in all, the temperature in Step (b) may range from about 17 or about 18°C to about 150°C, preferably from about 25°C to about 120°C, even more preferably from about 30°C to about 100°C.

Temperatures beyond about 150°C are not preferred, as may cause thermal decomposition phenomena affecting either HFSI or its onium salt, so detrimentally affecting the overall yield of the method of the invention.

The Step (d) of recovering the said onium salt of FSI from said mixture (M) can be carried out according to standard techniques.

Notably, if the mixture (M) essentially consists of the onium salt of FSI, said Step (d) may essentially correspond to discharging the mixture (M) from the reaction vessel, so as to obtain the said onium salt of FSI.

When the mixture (M) is a molten composition comprising unreacted molten HFSI in combination with molten onium salt of FSI, the recovery of onium salt of FSI of Step (d) may be carried out by any appropriate separation techniques. Distillation of unreacted HFSI may also be used, leveraging the difference in volatility between HFSI and onium salt of FSI. If the onium salt of FSI is insoluble in the molten HFSI, solid/liquid separation techniques, such as filtration, decantation, centrifugation, and the like may be used. In such embodiments, additional steps may be required for further removal of unreacted HFSI from the insoluble onium salt of FSI.

Based on different melting points of HFSI and onium salt of FSI, fractional melt crystallization may be applied in Step (d) to said mixture (M), so separating onium salt of FSI from molten HFSI, which can be recycled to Step (b) of the method. Fractional crystallization can be realized according to usual techniques, comprising notably a solid/liquid separation step, for separating solidified and crystallized onium salt of FSI from molten (liquid phase) HFSI.

As said, another object of the present invention is a method for producing an alkali metal salt of bis(fluoro sulfonyl)imide, such method comprising:
a) melting bis(fluorosulfonyl)imide (HFSI); and
b) contacting molten HFSI with an onium chloride, so as to produce a molten mass comprising an onium salt of bis(fluorosulfonyl)imide (onium salt of FSI) and dissolved HCl gas;
c) removing dissolved HCl gas from the said molten mass; and
d) recovering the said onium salt of FSI from said molten mass; and
e) reacting the onium salt of FSI with an alkali metal salt to obtain an alkali metal salt of bis(fluorosulfonyl)imide (FSI); and
f) recovering said alkali metal salt of bis(fluoro sulfonyl)imide.

Steps (a) to (d) have been described above in connection with the method for producing an onium salt of bis(fluorosulfonyl)imide (onium salt of FSI).

An onium salt of FSI is obtained thereby. One or more optional steps may be performed after Step (d) and before carrying out Step (e). The method may thus comprise at least one further step selected from a separation, re-crystallization, washing, and/or drying of the onium salt of FSI. Each of these steps may be repeated and the sequence thereof may be in any order.

Such further step(s) may be for example one or more separation steps, to increase the purity of the onium salt of FSI.

One or more than one crystallization step of the onium salt of FSI may be performed, typically by use of one or more solubilizing solvent and one or more precipitation solvent. In that respect, it may be possible to dissolve first the onium salt of FSI in an appropriate solubilizing organic solvent. All features described above in connection with the diluent which may or may not be used in Step (b) in the method for producing the onium salt of FSI are applicable to the solubilizing organic solvent, suitable for purifying the onium salt of FSI.

The precipitation solvent is preferably selected among the organic solvents which are highly soluble within the organic solvent possibly used in dissolution step and which are poor solvents for the onium salt of FSI. Said precipitation solvent may be selected from the group consisting of halogenated solvents like dichloromethane, dichloroethane, chloroform, and carbon tetrachloride; substituted aromatic hydrocarbon solvents like chlorobenzene, dichlorobenzene and toluene; alkane solvents like cyclohexane, hexane, heptane, and IsoparTM; preferably among dichloromethane and dichloroethane. Alternatively, in combination therewith or in an additional separate crystallization step, the precipitation solvent may be selected from halogenated alcohols. Accordingly, the halogenated alcohol may be preferably selected from the group consisting of nonafluoro-tert-butanol ((CF₃)₃COH), hexafluoroisopropanol ((CF₃)₂CHOH), pentafluorophenol, difluoroethanol (HCF₂CH₂OH), and trifluoroethanol (CF₃CH₂OH), more preferably selected from difluoroethanol and trifluoroethanol, and even more preferably being trifluoroethanol. Regardless of the precipitation solvent used, it may be used alone, in combination with another precipitation solvent such as one of those listed above or in combination with another solubilizing organic solvent, for instance selected from the group consisting of carbonates like ethyl methyl carbonate (EMC), and dimethyl carbonate (DMC); esters like ethyl acetate, butyl acetate, and ethyl propionate; nitrile compounds like valeronitrile, and acetonitrile; cyclic ethers like 1,4-dioxane. Such one or more crystallization step(s) may optionally be performed as described in WO 2020/099527.

Among the possible further steps which may be performed after Step (d) and before Step (e), one or more washing step(s) of the onium salt of FSI may be performed with any suitable solvent, e.g. chosen from those possibly used as diluents in Step (b), as detailed above and/or chosen from those referred above as precipitating solvents. The said one or more washing step(s) is advantageously associated with one or more drying step(s), so as to obtain an onium salt of FSI which is dry and purified. Such a drying step may be carried out by any means known by the person skilled in the art, typically under reduced pressure and/or by heating and/or with an inert gas flow, typically a nitrogen flow.

In the inventive method for producing an alkali metal salt of bis(fluoro sulfonyl)imide, the onium salt of FSI is advantageously reengaged into a further Step (e) consisting in reacting the onium salt of FSI with an alkali metal salt to obtain an alkali metal salt of bis(fluorosulfonyl)imide (FSI) (alkali salt of FSI).

The onium salt of FSI may be used as such or solubilized in a solvent, according to the nature of the alkali metal salt.

According to a first preferred embodiment, the onium salt of FSI is solubilized in an organic solvent, hereafter called "alkalinization solvent".

As an alternative, according to a second preferred embodiment, the onium salt of FSI is solubilized in an aqueous medium, i.e. in a medium essentially consisting of water. Minor amounts of an organic solvent may be present in the aqueous medium, although it may be preferably for the organic solvent in this embodiment to be present in the aqueous medium in an amount of less than 1 wt. %, preferably of less than 0.5 wt.%, more preferably of less than 0.1 wt.%, with respect to the total weight of the aqueous medium. The said organic solvent may have the same features as the alkalinization solvent of the alternative embodiment.

When used, the alkalinization solvent may be the same or may be different from the diluent possibly used in Step (b) referred above. Advantageously, the alkalinization solvent of Step (e) is selected from the group consisting of the solvent listed above as possible diluents used in Step (b). More specifically, said alkalinization solvent may be selected from the aprotic organic solvents, preferably:
- cyclic and acyclic carbonates, for instance ethylene carbonate, propylene carbonate, butylene carbonate, dimethyl carbonate, ethyl methyl carbonate, diethyl carbonate,
- cyclic and acyclic esters, for instance gamma-butyrolactone, gamma-valerolactone, methyl formate, methyl acetate, methyl propionate, ethyl acetate, ethyl propionate, isopropyl acetate, propyl propionate, butyl acetate,
- cyclic and acyclic ethers, for instance diethylether, diisopropylether, methyl-t-butylether, dimethoxymethane, 1,2-dimethoxyethane, tetrahydrofuran, 2-methyltetrahydrofuran, 1,3-dioxane, 4-methyl-1,3-dioxane, 1,4-dioxane,
- amide compounds, for instance N,N-dimethylformamide, N-methyl oxazolidinone,
- sulfoxide and sulfone compounds, for instance sulfolane, 3-methylsulfolane, dimethylsulfoxide,
- cyano-, nitro-, chloro- or alkyl- substituted alkane or aromatic hydrocarbon, for instance acetonitrile, valeronitrile, adiponitrile, benzonitrile, nitromethane, nitrobenzene.

According to a preferred embodiment, the alkalinization solvent is selected from the group consisting of ethyl acetate, isopropyl acetate, butyl acetate, ethylene carbonate, dimethyl carbonate, ethyl methyl carbonate, propylene carbonate, valeronitrile and acetonitrile.

The alkali metal salt may be selected from the group consisting of lithium salt, sodium salt and potassium salt. Preferably, the alkali metal salt is a lithium salt, and the alkali metal salt of FSI obtained by the method according to the invention is a lithium salt of FSI.

Examples of alkali metal salts include alkali metal hydroxides, alkali metal hydroxide hydrates, alkali metal carbonates, alkali metal hydrogen carbonates, alkali metal chlorides, alkali metal fluorides, alkali metal alkoxide compounds, alkyl alkali metal compounds, alkali metal acetates, and alkali metal oxalates. Preferably, an alkali metal hydroxide or an alkali metal hydroxide hydrate may be used in Step (e). If the alkali metal salt is a lithium salt, then the lithium salt may be selected from the group consisting of lithium hydroxide LiOH, lithium hydroxide hydrate LiOH.H₂O, lithium carbonate Li₂CO₃, lithium hydrogen carbonate LiHCO₃, lithium chloride LiCl, lithium fluoride LiF, lithium alkoxide compounds such as CH₃OLi and Lithium ethoxide (EtOLi); alkyl lithium compounds such as EtLi (Et= ethyl), BuLi (Bu=butyl) and t-BuLi (t-Bu= tert-butyl), lithium acetate CH₃COOLi, and lithium oxalate Li₂C₂O₄. Preferably, lithium hydroxide LiOH or lithium hydroxide hydrate LiOH.H₂O may be used in Step (e).

Said alkali metal salt may be added in Step (e) as a solid, as a pure liquid/molten form or as an aqueous or organic solution. Preferably said alkali metal salt is added in Step (e) either as a solid, as a solution in an organic solvent or in an aqueous medium, or as a suspension in an organic solvent or in an aqueous medium.

The molar ratio alkali metal salt/onium salt of FSI used in Step (e) is preferably comprised between 0.5:1 and 5:1, more preferably between 0.9:1 and 2:1, and even more preferably between 1:1 and 1.5:1.

The reaction in Step (e) may be carried out at a temperature of between 0°C and 50°C, more preferably between 15°C and 35°C, and even more preferably at about the room temperature. Preferably, the reaction is carried out at atmospheric pressure, but it is not excluded to work below or above atmospheric pressure, for instance between 5 mbar and 1.5 bar, preferably between 5 mbar and 100 mbar.

Step (f) comprises recovering said alkali metal salt of bis(fluorosulfonyl)imide (FSI). Several techniques may be used in Step (f), which one of ordinary skills in the art will adapt depending on the nature of the reaction mixture of Step (e).

For instance, when the reaction medium from Step (e) is a biphasic (aqueous/organic) solution, especially when the alkali metal salt used in Step (e) is an aqueous solution, and the onium salt of FSI is provided as a solution in an organic solvent, Step (f) may comprise a phase separation step, during which the aqueous phase is removed and the alkali metal salt of FSI is recovered in the organic phase. Additional steps may comprise filtration, concentration, extraction, recrystallization, purification by chromatography, drying, such as notably azeotropic drying, and/or formulation.

By carrying out Step (e) according to the process of the invention, an onium salt is formed as by-product. In subsequent Step (f), this by-product may be separated from the target alkali metal salt of bis(fluorosulfonyl)imide (FSI) by conventional methods known by the skilled person. More advantageously, the said onium salt may alternatively be recycled to prepare an onium chloride that may be used in Step (b). Any known method by the skilled person may be used in that respect. After isolation of the onium salt from the reaction medium, one or more drying operations, as well as purification operations of the onium salt, may be carried out. For instance, the method depicted in US4075306 may be used to dry the onium salt. Any conventional method may be used thereto.

According to a particular embodiment of the process according to the invention wherein an alkali metal hydroxide (or hydrate thereof) is used as alkali metal salt to carry out Step (e), an onium hydroxide is formed as by-product. This by-product may be eliminated in Step (f) by conventional methods known by the skilled person. More advantageously, it may alternatively be recycled, especially to prepare an onium chloride that may be used in Step (b). More particularly, the onium hydroxide by-product formed in Step (e) may be reacted with the hydrogen chloride by-product recovered in Step (c) to prepare an onium chloride that may be used to carry out Step (b). The skilled person knows the conditions in which such a reaction can be carried out. Such recycling loops are very suitable to improve the cost-efficiency and environmental impact of the process. It is also standard practice to ensure that the by-products so recycled are submitted advantageously to all required purification steps, such as drying (e.g. azeotropic drying), crystallization, distillation, and the like.

Generally speaking, all raw materials used in the method according to the invention, including solvents, reagents, etc., may preferably show very high purity criteria. Preferably, their content of metal components such as Na, K, Ca, Mg, Fe, Cu, Cr, Ni, Zn, is below 10 ppm, more preferably below 2 ppm.

Should the disclosure of any patents, patent applications, and publications which are incorporated herein by reference conflict with the description of the present application to the extent that it may render a term unclear, the present description shall take precedence.

The invention will now be further described in examples, which are given by way of illustration and which are not intended to limit the specification or the claims in any manner.

### EXAMPLES

### Example 1

A previously inerted tri-necked 100 mL glass round-bottomed flask was equipped with a condenser, an argon inlet, a powder doser and was installed into an alu block. The condenser was connected to an aqueous basic scrubber to capture the vapors of HCl. Molten HFSI (Imidodisulfuryl Fluoride, 45.3 g) was introduced under Argon atmosphere into the flask by cannulation and was pre-heated at 50°C for about 15 min. Anhydrous NH₄Cl (ammonium chloride, 16.4 g) (previously dried overnight under vacuum) was introduced continuously over 1 hour into molten HFSI.

Addition of NH₄Cl was accompanied by evolution of gaseous HCl, which was trapped into the scrubber. During the addition, the mixture's temperature was progressively increased to 90°C following HFSI conversion to NH4FSI, in order to maintain the reaction mass in the molten phase at a sufficient viscosity for enabling the HCl evolution to proceed.

When the addition of NH₄Cl was completed, the temperature was decreased from 90°C to room temperature, the colourless liquid mixture rapidly solidified. The Conversion measured by ¹H NMR was >90%, and selectivity was ∼94% as determined by ¹⁹F NMR.

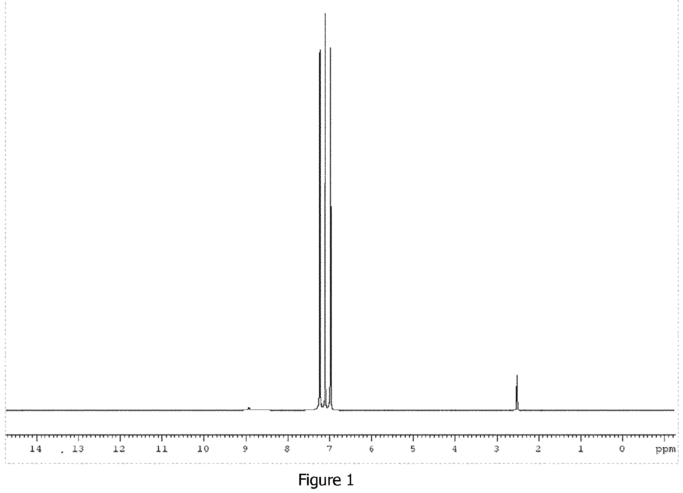

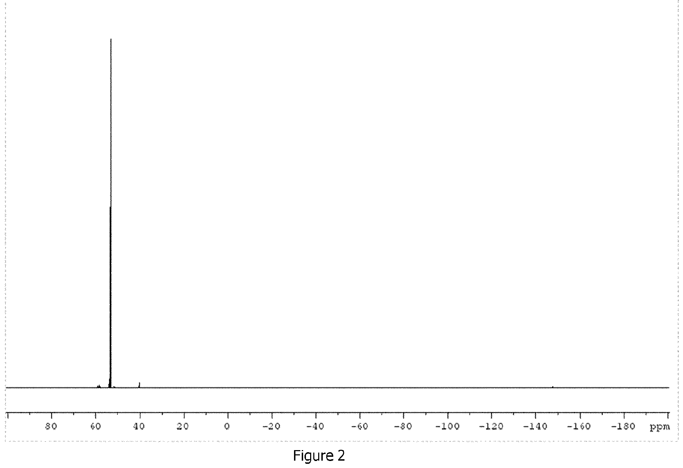

¹H-NMR and ¹⁹F-NMR of the product so obtained are provided in Figures 1 and 2, respectively.

## Claims

1. A method for producing an onium salt of bis(fluorosulfonyl)imide (onium salt of FSI), comprising the steps of:
a) melting bis(fluorosulfonyl)imide (HFSI); and
b) contacting molten HFSI with an onium chloride, so as to produce a molten mixture [mixture (M)] comprising an onium salt of bis(fluorosulfonyl)imide (onium salt of FSI) and dissolved HCl gas;
c) removing dissolved HCl gas from the said molten mixture (M); and
d) recovering the said onium salt of FSI from said mixture (M).

2. The method of Claim 1, wherein:
- in Step (a), HFSI is molten, by raising the temperature beyond its melting point, that is to say at a temperature exceeding about 17°C; and wherein the temperature is Step (a) ranges preferably between 17 and 100°C, more preferably between 18 to 80°C, even more preferably between 20 to 60°C; and/or
- HFSI is molten under a protective atmosphere, wherein the amount of moisture in Step (a) is preferably kept below 5,000 ppm, more preferably below 1,000 ppm, more preferably below 500 ppm, more preferably below 100 ppm even more preferably below 50 ppm, with respect to the HFSI.

3. The method of anyone of the preceding claims, wherein the onium salt comprises an onium cation selected from the group consisting of phosphonium cation, oxonium cation, sulfonium cation, fluoronium cation, chloronium cation, bromonium cation, iodonium cation, selenonium cation, telluronium cation, arsonium cation, stibonium cation, bismutonium cation; iminium cation, diazenium cation, nitronium cation, diazonium cation, nitrosonium cation, hydrazonium cation, diazenium dication, diazonium dication, imidazolium cation, pyridinium cation, quaternary ammonium cation, tertiary ammonium cation, secondary ammonium cation, primary ammonium cation, ammonium NH₄⁺ cation, piperidinium cation, pyrrolidinium cation, morpholinium cation, pyrazolium cation, guanidinium cation, isouronium cation and isothiouronium cation; and wherein preferably, the onium cation is selected from the group consisting of imidazolium cation, pyridinium cation, quaternary ammonium cation, tertiary ammonium cation, secondary ammonium cation, primary ammonium cation, ammonium NH4+ cation, piperidinium cation, pyrrolidinium cation, morpholinium cation, pyrazolium cation, guanidinium cation, and isouronium cation; and wherein most preferably the onium cation is selected from the group consisting of:
- imidazolium cations selected from the group consisting of 1,3-dimethylimidazolium cation, 1-ethyl-3-methylimidazolium cation, 1-propyl-3-methylimidazolium cation, 1-butyl-3-methylimidazolium cation, 1-pentyl-3-methylimidazolium cation, 1-hexyl-3-methylimidazolium cation, 1-heptyl-3-methylimidazolium cation, 1-octyl-3-methylimidazolium cation, 1-decyl-3-methylimidazolium cation, 1-tetradecyl-3-methylimidazolium cation, 1-hexadecyl-3-methylimidazolium cation, 1-octadecyl-3-methylimidazolium cation, 1-allyl-3-ethylimidazolium cation, 1-allyl-3-butylimidazolium cation, 1,3-diallylimidazolium cation, 1-ethyl-2,3-dimethylimidazolium cation, 1-butyl-2,3-dimethylimidazolium cation, 1-hexyl-2,3-methylimidazolium cation, and 1-hexadecyl-2,3-methylimidazolium cation;
- pyridinium cations selected from the group consisting of 1-ethylpyridinium cation, 1-butylpyridinium cation, 1-hexylpyridinium cation, 1-octylpyridinium cation, 1-ethyl-3-methylpyridinium cation, 1-ethyl-3-hydroxymethylpyridinium cation, 1-butyl-3-methylpyridinium cation, 1-butyl-4-methylpyridinium cation, 1-octyl-4-methylpyridinium cation, 1-butyl-3,4-dimethylpyridinium cation, and 1-butyl-3,5-dimethylpyridinium cation;
- quaternary ammonium cations selected from the group consisting of tetramethylammonium cation, tetraethylammonium cation, tetrapropylammonium cation, tetrabutylammonium cation, tetraheptylammonium cation, tetrahexylammonium cation, tetraoctylammonium cation, triethylmethylammonium cation, propyltrimethylammonium cation, diethyl-2-methoxyethylmethylammonium cation, methyltrioctylammonium cation, cyclohexyltrimethylammonium cation, 2-hydroxyethyltrimethylammonium cation, trimethylphenylammonium cation, benzyltrimethylammonium cation, benzyltributylammonium cation, benzyltriethylammonium cation, dimethyldistearylammonium cation, diallyldimethylammonium cation, 2-methoxyethoxymethyltrimethylammonium cation, N-methoxytrimethylammonium cation, N-ethoxytrimethylammonium cation, N-propoxytrimethylammonium cation and tetrakis(pentafluoroethyl)ammonium cation;
- tertiary ammonium cations selected from the group consisting of trimethylammonium cation, triethylammonium cation, tributylammonium cation, diethylmethylammonium cation, dimethylethylammonium cation, dibutylmethylammonium cation, and 4-aza-1-azoniabicyclo[2.2.2]octane cation;
- secondary ammonium cations selected from the group consisting of dimethylammonium cation, diethylammonium cation, and dibutylammonium cation;
- primary ammonium cations selected from the group consisting of methylammonium cation, ethylammonium cation, butylammonium cation, hexylammonium cation, and octylammonium cation;
- ammonium cation NH₄⁺;
- piperidinium cations selected from the group consisting of 1-propyl-1-methylpiperidinium cation and 1-(2-methoxyethyl)-1-methylpiperidinium cation;
- pyrrolidinium cations selected from the group consisting of 1-propyl-1-methylpyrrolidinium cation, 1-butyl-1-methylpyrrolidinium cation, 1-hexyl-1-methylpyrrolidinium cation, and 1-octyl-1-methylpyrrolidinium cation;
- morpholinium cations selected from the group consisting of 4-propyl-4-methylmorpholinium cation and 4-(2-methoxyethyl)-4-methylmorpholinium cation;
- pyrazolium cations selected from the group consisting of 2-ethyl-1,3,5-trimethylpyrazolium cation, 2-propyl-1,3,5-trimethylpyrazolium cation, 2-butyl-1,3,5-trimethylpyrazolium cation, and 2-hexyl-1,3,5-trimethylpyrazolium cation;
- guanidinium cations selected from the group consisting of guanidinium cation and 2-ethyl-1,1,3,3-tetramethylguanidinium cation; and
- isouronium cations selected from the group consisting of 2-ethyl-1,1,3,3-tetramethylisouronium cation.

4. The method according to anyone of the preceding claims, wherein
- the onium chloride used in Step (b) is anhydrous and wherein the moisture content of the onium chloride is below 5,000 ppm, more preferably below 1,000 ppm, more preferably below 500 ppm, more preferably below 100 ppm even more preferably below 50 ppm; and/or
- the temperature in Step (b) ranges from about 17 or about 18°C to about 150°C, preferably from about 25°C to about 120°C, even more preferably from about 30°C to about 100°C.

5. The method according to anyone of the preceding claims, wherein Step (b) is performed in a stirred vessel adapted for ensuring intimate contact between molten HFSI and the onium chloride, and wherein the said stirred vessel may be an extruder, preferably a corrosion-resistant extruders are hence appropriate vessels for Step (b) of the present invention.

6. The method according to anyone of the preceding claims, wherein the onium chloride is contacted with the molten HFSI in Step (b) in the solid state, preferably under the form of a powder; and/or wherein the onium chloride is under the form of a powder and is delivered to the reaction vessel of Step (b) through a powder conveyor.

7. The method according to anyone of the preceding claims, wherein Step (b) and at least partially Step (c) advantageously occur simultaneously, and wherein Step (c) may continue after completion of Step (b), for achieving a more exhaustive removal of HCl.

8. The method according to anyone of the preceding claims, wherein:
- Step (d) may essentially correspond to discharging the mixture (M) from the reaction vessel, so as to obtain the said onium salt of FSI; and/or
- when the mixture (M) is a molten composition comprising unreacted molten HFSI in combination with molten onium salt of FSI, the recovery of onium salt of FSI in Step (d) comprises fractional melt crystallization of said mixture (M), so separating onium salt of FSI from molten HFSI, which can be recycled to Step (b) of the method.

9. A method for producing an alkali metal salt of bis(fluoro sulfonyl)imide, such method comprising:
a) melting bis(fluorosulfonyl)imide (HFSI); and
b) contacting molten HFSI with an onium chloride, so as to produce a molten mass comprising an onium salt of bis(fluorosulfonyl)imide (onium salt of FSI) and dissolved HCl gas;
c) removing dissolved HCl gas from the said molten mass; and
d) recovering the said onium salt of FSI from said molten mass; and
e) reacting the onium salt of FSI with an alkali metal salt to obtain an alkali metal salt of bis(fluorosulfonyl)imide (FSI); and
f) recovering said alkali metal salt of bis(fluoro sulfonyl)imide.

10. The method according to Claim 9, wherein anyone of the preceding claims, wherein Steps (a) to (d) have the features escribed according to anyone of Claims 1 to 8.

11. The method of Claim 9, wherein the Step (e) the onium salt of FSI may be used as such or solubilized in a solvent and wherein:
when the onium salt of FSI is solubilized:
- the onium salt of FSI is solubilized in an organic solvent which is preferably selected from the group consisting of
- cyclic and acyclic carbonates, for instance ethylene carbonate, propylene carbonate, butylene carbonate, dimethyl carbonate, ethyl methyl carbonate, diethyl carbonate,
- cyclic and acyclic esters, for instance gamma-butyrolactone, gamma-valerolactone, methyl formate, methyl acetate, methyl propionate, ethyl acetate, ethyl propionate, isopropyl acetate, propyl propionate, butyl acetate,
- cyclic and acyclic ethers, for instance diethylether, diisopropylether, methyl-t-butylether, dimethoxymethane, 1,2-dimethoxyethane, tetrahydrofuran, 2-methyltetrahydrofuran, 1,3-dioxane, 4-methyl-1,3-dioxane, 1,4-dioxane,
- amide compounds, for instance N,N-dimethylformamide, N-methyl oxazolidinone,
- sulfoxide and sulfone compounds, for instance sulfolane, 3-methylsulfolane, dimethylsulfoxide,
- cyano-, nitro-, chloro- or alkyl- substituted alkane or aromatic hydrocarbon, for instance acetonitrile, valeronitrile, adiponitrile, benzonitrile, nitromethane, nitrobenzene; or
- the onium salt of FSI is solubilized in an aqueous medium

12. The method of anyone of Claims 9 to 11, wherein the alkali metal salt is selected from the group consisting of lithium salt, sodium salt and potassium salt, and preferably, the alkali metal salt is a lithium salt, and the alkali metal salt of FSI obtained by the method according to the invention is a lithium salt of FSI.

13. The method of Claim 12, the alkali metal salt is either an alkali metal hydroxide or an alkali metal hydroxide hydrate or is a lithium salt, preferably selected from the group consisting of lithium hydroxide LiOH, lithium hydroxide hydrate LiOH.F₂O, lithium carbonate Li₂CO₃, lithium hydrogen carbonate LiHCO₃, lithium chloride LiCl, lithium fluoride LiF, lithium alkoxide compounds such as CH₃OLi and EtOLi; alkyl lithium compounds such as EtLi, BuLi and t-BuLi, lithium acetate CH₃COOLi, and lithium oxalate Li₂C₂O₄.

14. The method according to anyone of Claims 9 to 14,
- wherein the molar ratio alkali metal salt/onium salt of FSI used in Step (e) is comprised between 0.5:1 and 5:1, more preferably between 0.9:1 and 2:1, and even more preferably between 1:1 and 1.5:1; and/or
- wherein the reaction in Step (e) is carried out at a temperature of between 0°C and 50°C, more preferably between 15°C and 35°C, and even more preferably at about the room temperature; and/or
- wherein the reaction is carried out at atmospheric pressure, below or above atmospheric pressure.
